Europäisches Patentamt

European Patent Office

Office européen des brevets

(19)

(11) Veröffentlichungsnummer: **0 261 508 B1**

(12) **EUROPÄISCHE PATENTSCHRIFT**

(45) Veröffentlichungstag der Patentschrift: 06.11.91

(51) Int. Cl.5: **B65G 47/61**

(21) Anmeldenummer: **87113244.5**

(22) Anmeldetag: **10.09.87**

(54) **Einrichtung zum Transport von Bobinen aus Verpackungsmaterial in einer Verpackungsmaschinenanlage.**

(30) Priorität: **23.09.86 DE 3632237**

(43) Veröffentlichungstag der Anmeldung:
**30.03.88 Patentblatt 88/13**

(45) Bekanntmachung des Hinweises auf die
Patenterteilung:
**06.11.91 Patentblatt 91/45**

(84) Benannte Vertragsstaaten:
**DE FR GB IT**

(56) Entgegenhaltungen:
**DE-A- 2 603 303**
**DE-A- 2 714 788**
**DE-A- 3 408 171**
**DE-B- 1 205 905**
**US-A- 4 526 267**

(73) Patentinhaber: **Focke & Co. (GmbH & Co.)**
**Siemensstrasse 10**
**W-2810 Verden(DE)**

(72) Erfinder: **Focke, Heinz**
**Moorstrasse 64**
**W-2810 Verden(DE)**
Erfinder: **Liedtke, Kurt**
**Trift 18**
**W-2810 Verden(DE)**

(74) Vertreter: **Bolte, Erich, Dipl.-Ing. et al**
**c/o Meissner, Bolte & Partner Patentanwälte**
**Hollerallee 73**
**W-2800 Bremen 1(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Einrichtung zum Transport von Gegenständen, insbesondere Bobinen, von einem Vorrat zu wenigstens einer Aufnahmestation, insbesondere zu einer Mehrzahl von Packungs- oder anderen Verarbeitungsmaschinen einer (Zigaretten-)Herstellungs- und/Verpackungsanlage, mit mindestens einem oberhalb der Verarbeitungsmaschinen (Linien) verlaufenden Kreisförderer mit einer Mehrzahl von Gegenstandsträgern, insbesondere Bobinenträgern, mit je einem vorkragenden Tragorgan, insbesondere mit einem Tragzapfen, welcher zur Aufnahme wenigstens eines Gegenstands bzw. einer Bobine in eine entsprechende Öffnung der Bobine mit seinem freien Ende voran in Förderrichtung des Bobinenträgers einführbar und zur Übergabe des Gegenstands bzw. der Bobine an eine Verarbeitungsmaschine vorgesehen ist.

Leistungsfähige Zigarettenfabriken sind mit mehreren jeweils aufeinander abgestimmten und zusammenwirkenden Zigaretten-Herstellungs- und Verpackungsmaschinen - sogenannten Linien - ausgerüstet. Eine derartige Linie besteht üblicherweise aus einer Zigaretten-Herstellungsmaschine (Strangmaschine), einer Filteransetzmaschine (soweit zutreffend) und Verpackungsmaschinen für die Verpackung von Zigaretten-Gruppen in aus mehreren Zuschnitten unterschiedlichen Verpackungsmaterials bestehende Verpackungen. Der Verpackungsbereich einer Linie umfaßt üblicherweise eine Stanniol-Verpackungsmaschine, eine Papier-Verpackungsmaschine und eine Poly-Verpackungsmaschine.

Die vorgenannten Verpackungs- und anderen Verarbeitungsmaschinen müssen mit Material versorgt werden, nämlich in erster Linie Verpackungsmaterial, aber auch mit sogenanntem Belagpapier für die Herstellung der (doppelten) Filter im Bereich der Filteransetzmaschine. Infolge der hohen Leistung dieser Herstellungs- und Verpackungsmaschinen besteht laufend ein hoher Bedarf an Verpackungsmaterial, welches in Gestalt von Rollen (Bobinen) den Verarbeitungsmaschinen zugeführt wird. Die Verpackungsmaschinen sind mit Bobinen-Wechselvorrichtungen ausgestattet, auf denen jeweils eine "aktive", ablaufende Bobine und eine VorratsBobine bereitgehalten werden.

So ist aus der DE-AS 1 205 905 ein Kreisförderer mit einer Vielzahl von Bobinenträgern bekannt, die der Aufnahme einer Bobine oder dergleichen sowie der Übergabe derselben an eine Verarbeitungsmaschine dienen. Das für die jeweilige Bobine vorgesehene Tragorgan eines jeden Bobinenträgers ist hakenförmig wie auch kippbar ausgebildet, wodurch erreicht werden soll, daß die jeweilige zu transportierende bzw. transportierte Bobine von dem Tragorgan einerseits sicher aufgenommen und ohne verlustig zu gehen zuverlässig befördert und andererseits an vorgegebener Stelle einfach abgegeben werden kann. Der hierfür vorgesehene Kippvorgang des Tragorgans bzw. des gesamten Bobinenträgers wird mittels eines ortsfesten und baulich verhältnismäßig aufwendigen Kurvenstücks ausgelöst, welches zum einen eine Zwangskippung des Bobinenträgers gewährleistet und zum anderen ein weiteres Durchfördern des Bobinenträgers nach dem Kippvorgang erlaubt. Infolge des Kippvorgangs rutscht die aufgenommene und transportierte Bobine über das freie Ende des Tragorgans durch ihr Eigengewicht auf einen Aufnahmedorn von der Verarbeitungsmaschine herab.

Des weiteren ist in der US-PS 4 526 267 ein Kreisförderer beschrieben, der eine Vielzahl von hakenförmigen Bobinenträgern aufweist, mittels derer jeweils eine Bobine oder dergleichen von einem Vorrat zu einer Abnahmestation verbracht werden. Der hakenförmig ausgebildete Bobinenträger weist ein vorkragendes Tragorgan in Form eines Tragzapfens auf, der in eine entsprechende Öffnung der Bobine in Förderrichtung des Bobinenträgers einführbar ist.

Schließlich zeigt die DE-OS 3 408 171 eine Einrichtung zum Transport von Gegenständen, beispielsweise von auf Wickelwellen als Rollen aufgewickeltem, bahnförmigem Gut oder dergleichen, von einer Rollenschneidemaschine zu einer Ablage. Diese bekannte Einrichtung umfaßt ein Aufnahmeelement, daß diskontinuierlich innerhalb einer Rahmenkonstruktion hin- und herbewegbar ist. Darüber hinaus läßt sich das Aufnahmeelement um eine horizontale Drehachse um bis zu 90° verschwenken, wodurch dem Nachteil enger räumlicher Verhältnisse begegnet werden soll, die im wesentlichen auf der Ausbildung der starren Rahmenkonstruktion beruhen.

Der Erfindung liegt die Aufgabe zugrunde, Verarbeitungsmaschinen, insbesondere Verpackungsmaschinen für bahnförmiges Material (Verpackungsmaterial) in weitgehend automatisierter Weise ohne Eingriff von Bedienungspersonal in ausreichendem Umfange mit Bobinen des zu verarbeitenden Materials zu versorgen, und zwar insbesondere bei Großanlagen aus mehreren Linien.

Zur Lösung dieser Aufgabe ist die erfindungsgemäße Einrichtung dadurch gekennzeichnet, daß der den Tragzapfen aufnehmende Teil des Bobinenträgers, insbesondere ein Tragarm, um eine vertikale Achse derart drehbar gelagert ist, daß der Tragzapfen mit der aufgenommenen Bobine in zur Förderrichtung des Bobinenträgers entgegengesetzter Richtung drehbar ist, und daß im Bereich einer Entladestation wenigstens ein in den Förderweg der aufgenommenen Bobine hineinbewegbarer Abstreiferanschlag vorgesehen ist, an dem das gedrehte Tragorgan in Förderrichtung vorbeibewegbar und die von diesem aufgenommene Bobine abstreifbar sind.

Der Transport der Bobinen erfolgt demnach erfindungsgemäß durch einen Kreisförderer, der innerhalb des Fertigungsgebäudes oberhalb der Verarbeitungsmaschinen, üblicherweise unterhalb der Decke des Gebäudes, angebracht ist. Der Kreisförderer besteht aus einer endlosen Laufschiene, in der eine Mehrzahl von Bobinenträgern im Abstand voneinander umlaufen. Die Bobinenträger sind so ausgebildet, daß im Bereich einer Aufnahmestation - bei Bedarf - eine Bobine aufgenommen und im Bereich einer Abgabestation, nämlich benachbart bzw. oberhalb der Verarbeitungsmaschine, abgegeben wird.

Bei der bevorzugten Ausführungsform der Erfindung ist der Bodinenträger so ausgebildet bzw. so betätigt, daß die entsprechend in den Beladestationen bereitgehaltenen Bobinen selbsttätig während bzw. durch die Förderbewegung der Bobinenträger aufgenommen werden. Des weiteren ist vorgesehen, daß die Bobinen im Bereich einer Abgabestation ebenfalls selbsttätig von dem Bobinenträger abgenommen und der Verarbeitungsmaschine bzw. einer Bobinenwechselvorrichtung derselben zugeführt werden.

Nach einem weiteren Vorschlag der Erfindung sind dem Kreisförderer mehrere Beladestationen zugeordnet, jeweils für Bobinen unterschiedlicher Abmessung (Breite). Auch sind die Bobinenträger in diesem Falle jeweils für eine bestimmte Type einer Bobine ausgebildet, insbesondere bemessen. Die Bobinen werden zweckmäßigerweise auf Paletten dem Bereich der Beladestation zur Verfügung gestellt. Jede Beladestation ist mit einem gesonderten Hochförderer für die Bobinen versehen. Durch diesen gelangen die Bobinen in die eigentliche Beladestation in Höhe der Bewegungsbahn der umlaufenden Bobinenträger. Jede Bobine wird in einer Ebene quer zur Förderrichtung bereitgehalten, so daß ein Tragorgan des Bobinenträgers, insbesondere ein Tragzapfen, durch die Bewegung in eine (mittige) Bobinenöffnung einzutreten vermag. Während des Weitertransports wird der Bobinenträger um eine vertikale Achse gedreht, so daß der bei der Aufnahme einer Bobine in Förderrichtung nach vorn weisende Tragzapfen nach rückwärts gerichtet ist. Dadurch ist es möglich, die Bobine im Bereich der Abgabestation durch ortsfeste Anschläge vom Tragzapfen abzustreifen.

In der Abgabestation werden die Bobinen durch einen Zwischenförderer aufgenommen, der die Bobinen selbsttätig der Bobinenwechselvorrichtung der Verarbeitungsmaschine zuführt.

Gemäß einer Alternativ-Ausführung der Erfindung sind die Bobinenträger so ausgebildet, daß deren Tragzapfen axial verschiebbar ist. Dadurch kann in der Beladestation die Bobine durch Axialverschiebung des Tragzapfens (in die Bobinenöffnung) aufgenommen und in entsprechender Weise im Bereich der Abgabestation vom Bobinenträger abgenommen werden.

Gemäß einer weiteren Alternative kann der Tragzapfen des Bobinenträgers bzw. eine Führung desselben auf- und abbewegbar an einem Fahrwerk des Bobinenträgers angeordnet sein, z.B. an einer aufrechten Tragstange.

Weitere Merkmale der Erfindung betreffen die Ausgestaltung des Bobinenträgers, des Kreisförderers, der Beladestationen sowie der Bobinenwechselvorrichtung.

Ausführungsbeispiele der Erfindung werden nachfolgend anhand der Zeichnungen näher erläutert. Es zeigt:

Fig. 1     eine (Zigaretten-)Fabrikations- und Verpackungsanlage in schematischem Grundriß,

Fig. 2     einen Teilbereich der Anlage gemäß Fig. 1 in vergrößertem Maßstab, ebenfalls im Grundriß,

Fig. 3     eine Verpackungsmaschine in schematischer Seitenansicht mit Einrichtungen für die Zuführung von Bobinen,

Fig. 4     eine zu Fig. 3 quergerichtete Stirnansicht des oberen Teils der Verpackungsmaschine mit den Einrichtungen zum Zuführen von Bobinen in vergrößertem Maßstab, teilweise im Schnitt,

Fig. 5     eine Beladestation für Bobinen mit Hochförderer in schematischer Darstellung,

Fig. 6     einen Ausschnitt eines Kreisförderers im Grundriß, teilweise als Horizontalschnitt,

Fig. 7     einen Abschnitt des Kreisförderers mit Bobinenträger in Seitenansicht,

Fig. 8     den Kreisförderer im Querschnitt,

Fig. 9     einen weiteren Querschnitt durch den Kreisförderer mit Bobinenträger im Detail,

Fig. 10    ein anderes Ausführungsbeispiel eines Kreisförderers mit Bobinenträger in schematischer Seitenansicht,

Fig. 11    einen Querschnitt zu der Ausführung gemäß Fig.10 mit einem oberen Teil einer Verpackungsmaschine und Bobinenwechselvorrichtung,

Fig. 12    den Bobinenträger gemäß Fig. 10 und 11 bei der Aufnahme einer Bobine,

Fig. 13    eine Alternative für die Ausbildung einer Bobinen-Beladestation in schematischer Seitenansicht,

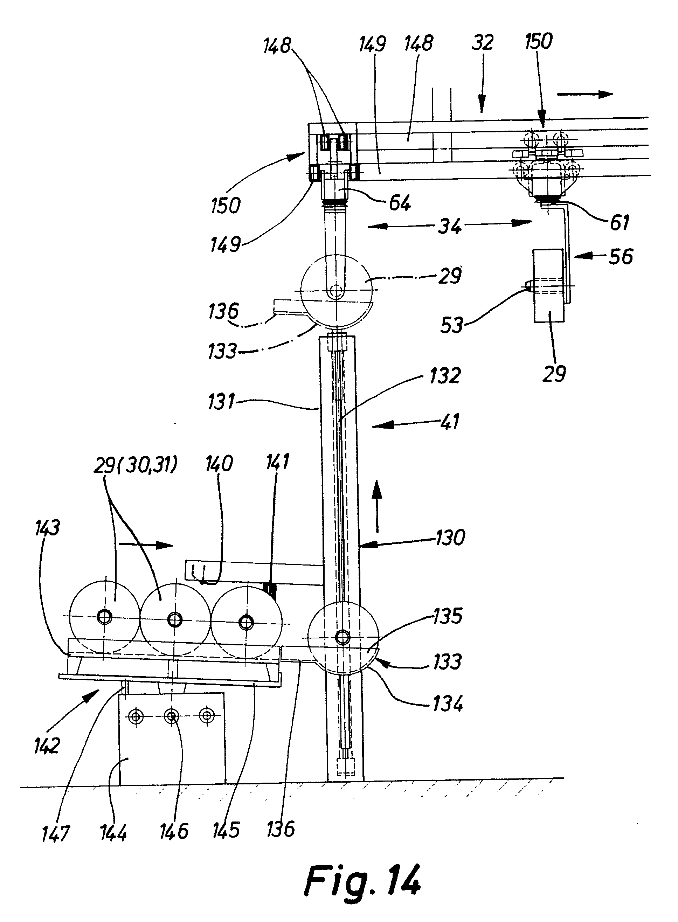

Fig. 14    eine weitere Alternativ-Ausführung für eine Bobinen-Beladestation,ebenfalls in Seitenansicht.

Die dargestellten und nachfolgend beschriebenen Ausführungsbeispiele betreffen den Bereich der Herstellung und Verpackung von Zigaretten. In einem langgestreckten, rechteckigen Fabrikationsgebäude 20 sind Zigaretten-Hestellungs- und Verpackungsmaschinen in funktionell aufeinander abgestimmten Einheiten - sogenannten Linien 21 - untergebracht. Jede Linie 21 besteht im vorliegenden Falle aus zwei Strangmaschinen 22, 23 (Zigaretten-Herstellungsmaschinen), einer Zigaretten-Verpackungsmaschine 24, insbesondere einem Hinge-Lid-Packer, einer Folieneinschlagmaschine 25 und einem Stangenpacker 26. Letzterer dient zur Herstellung von Gebinden aus mehreren Zigarettenpackungen. Die Strangmaschinen 22, 23 sind mit Filteransetzmaschinen 27 ausgerüstet, in deren Bereich ein (doppelt langer) Zigarettenfilter mit Belagpapier versehen wird. Die beschriebenen Maschinen und Aggregate sind durch eine Pakkungsförderbahn 28 miteinander verbunden. Bei dem dargestellten Ausführungsbeispiel sind vier Linien 21, 21a.. innerhalb des Fabrikationsgebäudes 20 untergebracht.

Jede Linie 21, 21a.. enthält, wie beschrieben, mehrere Verarbeitungsmaschinen für bahnförmiges Material, insbesondere Verpackungsmaterial. Im Bereich der Strangmaschinen 22, 23 wird das Belagpapier verarbeitet. Die Zigaretten-Verpackungsmaschine 24 verarbeitet Stanniol und Papier bzw. Karton als Verpackungsmaterial. Im Bereich der Folieneinschlagmaschine 25 wird Folienmaterial (Poly-Folien) verarbeitet, während der Stangenpacker 26 mit Papier versorgt werden muß. Die vorgenannten Materialien werden in Form von Bobinen angeliefert. Da bei dem vorliegenden Beispiel die Zigaretten-Verpackungsmaschine für die Herstellung von Klappschachteln vorbereitete Einzelzuschnitte verwendet, ebenso wie der Stangenpacker 26, fallen hier drei unterschiedliche Typen und Abmessungen von Bobinen an, nämlich Papier-Bobinen 29 für die Filteransetzmaschinen 27, Stanniol-Bobinen 30 für die Zigaretten-Verpakkungsmaschinen 24 und Poly-Bobinen 31 für die Folieneinschlagmaschinen 25.

Für den Transport der Bobinen 29, 30, 31 ist in dem Fabrikationsgebäude 20 ein am Rand desselben verlaufender, geschlossener Kreisförderer 32 installiert. Dieser befindet sich oberhalb der Verarbeitungsmaschinen (Linien 21..), insbesondere unterhalb einer Gebäudedecke. Der Kreisförderer 32 besteht aus einer annähernd rechteckig geführten, geschlossenen Förderschiene 33 und einer Mehrzahl von in dieser laufenden Tragorganen, nämlich Bobinenträgern 34. Diese dienen je zur Aufnahme einer Bobine 29, 30, 31.

Der Kreisförderer 32 ist bei dem vorliegenden Beispiel mit insgesamt achtzehn Bobinenträgern 34 bestückt, und zwar in unterschiedlicher Ausgestaltung bzw. Abmessung, angepaßt jeweils an die Abmessung der zu fördernden Bobinentype. Die Bobinenträger 34 laufen bei gleichen Abständen voneinander fortwährend um, wobei nach Bedarf Bobinen 29, 30, 31 im Bereich der Verarbeitungsmaschinen entnommen oder im Bereich einer Beladestation aufgenommen werden.

Die Beladung der Bobinenträger 34 erfolgt im Bereich einer zentralen Beladezone 35. Diese ist hier an einem Ende des Fabrikationsgebäudes 20 im Bereich eines kurzen Querabschnitts des Kreisförderers 32 gebildet. Für jede Bobinentype sind (mehrere) gesonderte Beladestationen 36, 36a, 36b.. gebildet.

Die Bobinen 29, 30, 31 werden im vorliegenden Falle auf Paletten 37 der jeweiligen Beladestation 36, 36a.. zugeführt. Vor der Beladezone 35 sind zu diesem Zweck entlang einer Gebäudemauer 38 Fahrbahnen 39 für Gabelstapler 40 gebildet. Diese transportieren jeweils eine mit Bobinen 29, 30, 31 beladene Palette 37 zu einer der Beladestationen 36, 36a, 36b.. .

In der Beladestation 36, 36a.. werden die beladenen Paletten 37 an einer vorgegebenen Stelle positioniert, und zwar in einer bestimmten Relativstellung zu einem Hochförderer 41 für die Bobinen. Die Anordnung ist so getroffen, daß zwischen den Paletten 37 einerseits und einem unteren Aufgabeende des Hochförderers 41 ein Zwischenraum als Operator-Weg 42 frei bleibt. Hier kann eine Bedienungsperson tätig werden und die in aufrechter Ebene auf der Palette 37 gestapelten Bobinen manuell in den Hochförderer 41 eingeben.

Der Hochförderer 41 transportiert die Bobinen 29, 30, 31 auf das Niveau des Kreisförderers 32. Beim vorliegenden Ausführungsbeispiel ist etwa in der Ebene des Kreisförderers 32 ein an den Hochförderer 41 anschließender Zwischenförderer 43 vorgesehen, der die Bobinen 29, .. 31 in der Position quer zur Transportrichtung des Kreisförderers 32 einer Übernahmestelle 44 zufördert. Der Zwischenförderer 43 ist hier als schiefe, zur Übernahmestelle 44 abfallende Förderbahn 45 ausgebildet, auf der die Bobinen 29..31 unter dem Eigengewicht zur Übernahmestelle 44 rollen. Vor dieser ist ein in Bewegungsrichtung verschiebbarer Anschlag 46 angebracht, der die Bobinen 29..31 vor der Übernahmestelle 44 fixiert und lediglich dann eine Bobine freigibt bzw. mit dieser zur Übernahmestelle 44 bewegt wird, wenn ein ankommender Bobinenträger 34 eine Bobine 29..31 von dieser Beladestation 36, 36a... aufzunehmen hat. Der Anschlag positioniert dabei die aufzunehmende Bobine exakt auf die Bewegungsbahn des Bobinenträgers 34. Der Zwischenförderer 43 dient jeder Beladestation 36, 36a... als Zwischenspeicher zur Aufnahme einer Anzahl von Bobinen 29..31.

Der Hochförderer 41 kann in verschiedener Weise ausgebildet sein. Bei dem vorliegenden Ausführungsbeispiel kommt ein Stangenförderer 47 zum Einsatz, dessen Förderstangen 48 die Bobinen 29..31 jeweils außermittig am Umfang unten erfassen. Die Förderstangen 48 sind in größeren Abständen voneinander angeordnet und werden durch eine endlose Kette 49 mitgenommen.

Die Bobinen werden in der für die Aufnahme durch den Bobinenträger 34 erforderlichen Relativ-Stellung (in vertikaler Ebene ausgerichtet) im Bereich des Hochförderers 41 zwischen seitlichen Führungen transportiert. Diese bestehen im vorliegenden Falle aus Vertikalbändern 50, 51. Diese laufen leer mit und werden durch die aufwärts geförderten Bobinen 29..31 über den jeweiligen Innentrum mitgenommen. Dadurch wird eine Reibung der Bobinen 29..31 an seitlichen Führungen vermieden.

Im Bereich des Übergangs vom Hochförderer 41 zum Zwischenförderer 43 befindet sich eine bogenförmige Leitwandung 52, die die Förderbewegung der Bobinen auf den Zwischenförderer 43 bewirkt.

Die Übernahme der Bobinen 29..31 durch die Bobinenträger 34 jeweils im Bereich einer Beladestation 36,36a, 36b.. erfolgt in besonderer Weise. Zu diesem Zweck ist jeder Bobinenträger mit einem quer bzw. horizontal gerichteten Tragzapfen 53 ausgerüstet, der in eine üblicherweise vorhandene Mittenöffnung 54 der Bobine gefahren wird und so die Bobine aufnimmt. Die Mittenöffnung 54 wird durch einen üblicherweise aus Pappe bestehenden, zylindrischen Hohlkern 55 der Bobine 29..31 gebildet. Der Tragzapfen 53 findet passend in dieser Mittenöffnung 54 Aufnahme.

Der Tragzapfen 53 ist an einem im vorliegenden Falle winkelförmigen Tragarm 56 des Bobinenträgers 34 angeordnet bzw. an einem aufrechten Schenkel 57 desselben. Ein hieran anschließender horizontaler Querschenkel 58 ist mit Fahrgestell 59 eines Laufrollenwagens 60 verbunden. Dierser ist in der Förderschiene 33 des Kreisförderers 32 verfahrbar.

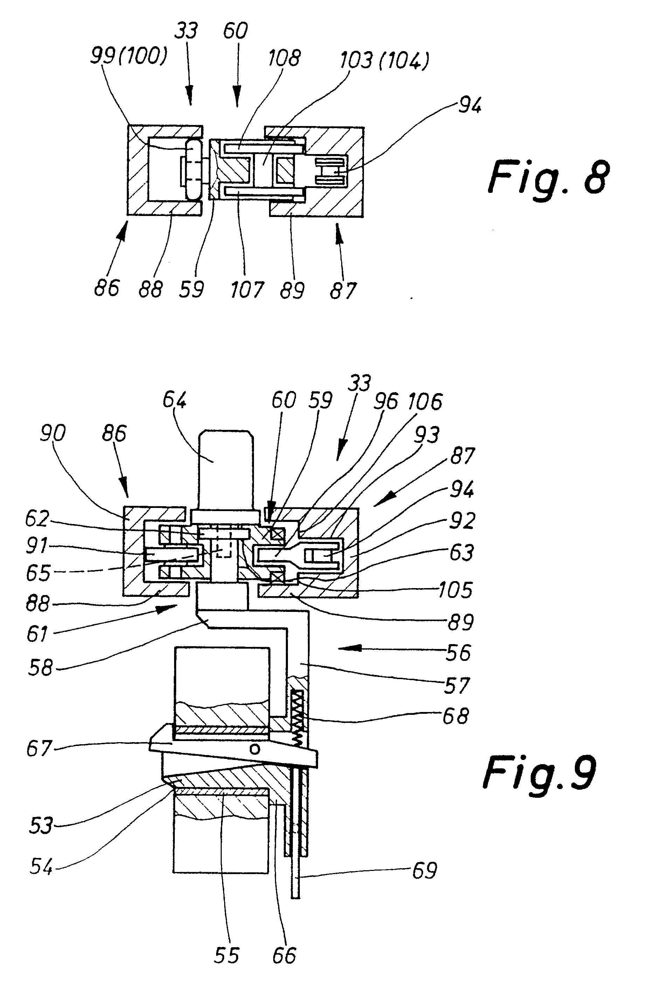

Wie insbesondere in Fig. 9 gezeigt, ist der Tragarm 56 bzw. dessen Querschenkel 58 mit einem Drehbolzen 61 verbunden, der um eine vertikale Achse drehbar im Fahrgestell 59 gelagert ist. Wie gezeigt, ist der Drehbolzen 61 am oberen Ende mit einer Erweiterung bzw. einem Bund 62 versehen, der in einer entsprechend geformten Ausnehmung 63 des Fahrgestells 59 drehbar lagert. Der Bund 62 überträgt Vertikallasten des Bobinenträgers 34 auf das Fahrgestell 59.

Zur Durchführung von Drehbewegungen des Drehbolzens 61 ist auf der Oberseite des Fahrgestells 59 ein E-Motor 64 angebracht, dessen Wellenzapfen 65 formschlüssig in eine Vertiefung bzw. Bohrung des Drehbolzens 61 greift und diesen so zu drehen vermag.

Mit dem so ausgebildeten Bobinenträger 34 werden die Bobinen in der Beladestation 36.. selbsttätig durch den in Bewegungsrichtung nach vorn weisenden Tragzapfen 34 aufgenommen, der durch die Förderbewegung der Bobinenträger 34 in die exakt positionierte Bobine bzw. deren Mittenöffnung 54 gefahren wird.

Die Bobine liegt an einem Ringanschlag 66 auf dem Tragzapfen 53 an. Durch ein verstellbares Sperrorgan ist die Bobine gegen unerwünschtes Herabgleiten von dem Tragzapfen 53 gesichert. Im vorliegenden Falle ist in einer schlitzförmigen Ausnehmung des Tragzapfens 53 ein zweiarmiger Schwenkhaken 67 gelagert, der die Außenseite der Bobine bzw. des Hohlkerns 55 in Sperrstellung erfaßt. Der Schwenkhaken 67 wird durch eine Feder 68 in die Verriegelungsstellung gedrückt. Eine in dem Schenkel 57 gelagerte, unten aus diesem herausragende Betätigungsstange 69 bewegt den Schwenkhaken 67 durch Aufwärtsbewegung in eine Entriegelungsstellung, und zwar jeweils im Bereich der Beladestation 36.. sowie im Bereich der Abnahme der Bobine vom Tragzapfen 53. In diesen Bereichen ist jeweils ein bewegbares oder auch ortsfestes Betätigungsorgan für die Betätigungsstange 69 installiert.

Die weitere Besonderheit besteht darin, daß die Bobine im Bereich der Verarbeitungsmaschinen in analoger Weise von dem Bobinenträger 34 angenommen, nämlich vom Tragzapfen 53 abgestreift wird. Auch dieser Vorgang erfolgt durch die Weiterbewegung der Bobinenträger 34 bei gleichzeitigem Festhalten der Bobine.

Zu diesem Zweck werden die Bobinenträger nach Verlassen der Beladestationen 36, 36a.. in einer Drehstation 70 um 180° gedreht, so daß der bis dahin in Transportrichtung nach vorn weisende Tragzapfen 53 nunmehr mit der Bobine nach rückwärts gerichtet ist. Zu diesem Zweck wird in der Drehstation 70 der E-Motor 64 betätigt, der die Drehung des Drehbolzens 61 und damit des Tragarms 56 bewirkt.

Jeder Verarbeitungsmaschine (Filteransetzmaschine 27, Folieneinschlagmaschine 25, Zigaretten-Verpackungsmaschine 24 oder Strangmaschinen 22, 23) ist eine Entladestation 71 zur Entnahme der Bobinen von den Bobinenträgern 34 - nach Bedarf - zugeordnet. Die Entladestation 71 befindet sich in Höhe des Kreisförderers 32 bzw. der Bewegungsbahn der Bobinenträger 34.

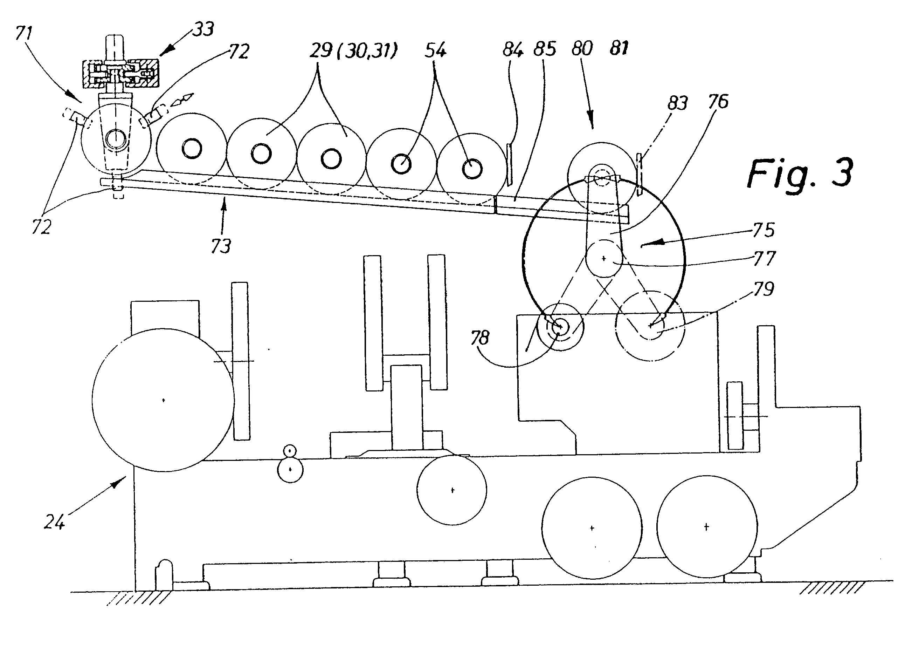

Wie aus Fig. 3 ersichtlich, sind jeder Entladestation 71 ortsfeste, jedoch quer zur Förderrichtung der Bobinen bewegbare Abstreiferanschläge 72 zugeordnet, im vorliegenden Falle drei längs des Umfangs in gleichen Abständen voneinander angeordnete. Diese Abstreiferanschläge 72 werden aus einer zurückgezogenen Position, in der die Bobinen frei durch die betreffende Entladestation 71 hindurchbewegt werden können, in eine Abstreiferstellung bewegt, in der Enden der Abstreiferanschläge 71 in die Bewegungsbahn der betreffenden Bobine ragen. Tritt nun diese durch die Förderbewegung des Bobinenträgers 34 in die Entladestation 71 ein, läuft sie gegen die Abstreiferanschläge 71 und wird in der Entladestation 71 bei Weiterbewegung des Bobinenträgers 34 festgehalten unter gleichzeitigem Abziehen von dem Tragzapfen 53.

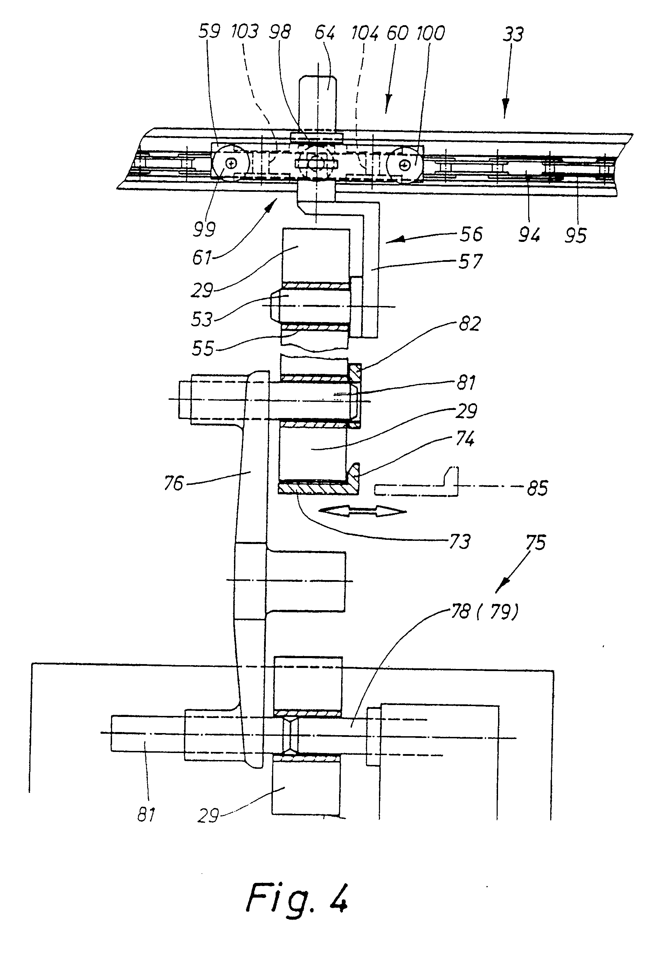

Die von dem Bobinenträger 34 abgenommenen Bobinen gelangen auf das obere Ende eines schräg abwärts gerichteten Übergabeförderers 73. Dieser ist im Querschnitt (Fig. 4) winkelförmig ausgebildet mit einem seitlichen, aufrechten Führungsschenkel 74.

Der Übergabeförderer 73, der durch die Aufnahmekapazität an Bobinen auch eine Zwischenspeicherfunktion erfüllt, fördert die Bobinen unmittelbar in eine Position zur Übernahme derselben durch eine Bobinenwechselvorrichtung 75 einer Verpackungs- oder sonstigen Verarbeitungsmaschine. Die Bobinenwechselvorrichtung 75 besteht im vorliegenden Falle aus einem Transportarm 76, der um ein Lager 77 alternativ im Uhrzeigersinn und im Gegenuhrzeigersinn schwenkbar ist. Durch diese Förderbewegung wird jeweils eine Bobine einem von zwei maschinenseitigen Bobinentragzapfen 78 und 79 zugeführt. Jeweils einer der Bobinentragzapfen 78, 79 trägt die Bobine, von der das zu verarbeitende Material der Verarbeitungsmaschine abgezogen wird.

Zur Übernahme der Bobine aus einer Übernahmestellung 80 ist der Transportarm 76 an seinem freien Ende mit einem axial verschiebbaren Bobinentragzapfen 81 versehen.Dieser wird in der oberen, aufrechten Stellung des Transportarms 76 axial verschoben aus einer zurückgezogenen Ausgangsstellung in die Tragstellung und damit in die Mittenöffnung 54 der Bobine. Die Bobine wird in dieser Übernahmestellung 80 auf dem unteren Teil des Übergabeförderers 73 durch einen Anschlag 82 gehalten, der auf der zum Transportarm 76 gegenüberliegenden Seite angeordnet ist.

Mit der Bobine auf dem Bobinentragzapfen 81 führt der Transportarm 76 eine Schwenkbewegung zum einen oder anderen Bobinentragzapfen 78, 79 der Verpackungsmaschine durch. In der Übergabeposition, in der der mittig gelagerte Transportarm 76 zur einen oder anderen Seite schräg nach unten gerichtet ist, befindet sich der Bobinentragzapfen 81 des Transportarms 76 in der axialen Position des einen oder anderen Bobinentragzapfens 78,79 der Verpackungsmaschine. Letzterer wird in Axialrichtung zum Transportarm 76 verschoben, nämlich in die Mittenöffnung 54 der Bobine hinein unter gleichzeitigem Zurückschieben des Bobinentragzapfens 81 am Transportarm 76 (Fig. 4 unten). Dadurch gelangt die Bobine ohne Querverschiebung, also ohne Veränderung der Transportebene, auf den Bobinentragzapfen 78, 79 der Verpackungsmaschine.

Die Übernahmestellung 80 wird durch einen feststehenden Positionsanschlag 83 am Ende des Übergabeförderers 73 bestimmt. Die übrigen Bobinen auf dem Übergabeförderer 73 werden durch einen bewegbaren Stopper 84 in ausreichendem Abstand von der Übernahmestellung 80 fixiert. Der Stopper 84 wird jeweils zurückgezogen, wenn eine weitere Bobine in die Übernahmestellung 80 bewegt werden soll (durch Eigengewicht rollt).

Ein unteres Teilende 85 des Übergabeförderers 73 ist bewegbar, nämlich zurückziehbar aus der Ausgangs- bzw. Förderstellung in die gemäß strichpunktierter Linie in Fig. 4. Diese Querbewegung des unteren Teilendes 85 ist erforderlich, wenn der Transportarm 76 im Gegenuhrzeigersinn geschwenkt wird, um eine aufgenommene Bobine zu transportieren.

Die vorstehend beschriebenen Bewegungen des Teilendes 85 des Übergabeförderers 73, des Positionsanschlages 83 sowie des Stoppers 84 erfolgen durch geeignete Stellorgane, insbesondere durch Druckmittelzylinder, die aus Gründen der Übersicht im einzelnen nicht dargestellt sind. Auch die Bobinentragzapfen 78, 79 bzw. 81 können auf diese Weise axial verschoben werden. Vorteilhafter ist aber eine Betätigung derselben nach Maßgabe der DE-Patentanmeldung P 36 31 205.3 .

Der Kreisförderer bzw. dessen Förderschiene 33 kann in verschiedener Weise ausgebildet sein. Bei dem vorliegenden bevorzugten Ausführungsbeispiel besteht die Förderschiene 33 aus zwei im wesentlichen C-förmigen Teilschienen 86, 87. Ein unterer, horizontaler Schienenschenkel 88, 89 dient als Laufbahn für den Laufrollenwagen 60. Ein aufrechter Schienensteg 90 der einen, äußeren Teilschiene 86 dient als Abstützwand für ein um eine horizontale Achse drehendes, äußeres Stützrad 91 des Laufrollenwagens 60. Ein aufrechter Schienensteg 92 der anderen, inneren Teilschiene 87 ist - bei entsprechender Abmessung - mit einer durchgehend verlaufenden Führungsnut 93 versehen, die mit Abstand vom unteren Schienenschenkel 89 verläuft und eine Schleppkette 94 aufnimmt. Diese ist das (zugbelastete) Antriebsorgan für den Kreisförderer 32.

Die Schleppkette 94 ist als Gliederkette ausgebildet mit um eine aufrechte Achse schwenkenden Kettengliedern. Einzelne Kettenglieder 95 sind mit einem quergerichteten Mitnehmerzapfen 96 versehen, der mit jeweils einem Laufrollenwagen 60 bzw. dem Fahrgestell 59 verbunden ist. Im vorliegenden Beispiel tritt der Mitnehmerzapfen 96 in eine Vertiefung 97 etwa in der Mitte des Fahrgestells 59 ein und schafft so die Mitnehmerverbindung desselben mit der Schleppkette 94.

Der Laufrollenwagen 60 ist so gestaltet, daß an der Innenseite, also im Bereich des inneren Schienenschenkels 89, lediglich eine mittige Abstützung vorgesehen ist, nämlich durch ein auf dem Schienenschenkel 89 ablaufendes Kugellager 98, welches konzentrisch zu der Vertiefung 97 für den Mitnehmerzapfen 96 angeordnet ist. Auf der äußeren Seite, also im Bereich des außen liegenden Schienenschenkels 88, ist der Laufrollenwagen 60 durch zwei im Abstand voneinander angeordnete (vordere und rückseitige) Laufräder 99 und 100 abgestützt. Diese befinden sich im Bereich von endseitigen Rücksprüngen 101 und 102, so daß der Laufrollenwagen 60 zwängungsfrei auch enge Kurven durchfahren kann.

Das bereits erwähnte Stützrad 91 befindet sich in halber Höhe des Fahrgestells 59 und läuft an dem äußeren Schienensteg 90 ab. Dieses Stützrad 91 ist etwa in der mittleren Querebene des Fahrgestells 59 angebracht. Innenseitig sind ebenfalls Stützräder 103 und 104 mit Abstand voneinander gelagert. Diese haben Anlage an unteren und oberen Stützflächen 105 und 106 unterhalb und oberhalb der Führungsnut 93. Die innenseitigen Stützräder 103 und 104 sind zu diesem Zweck nach dem Konstruktionsprinzip von Garnrollen ausgebildet, also mit oberen und unteren Radflanschen 107 und 108 (Fig. 8).

Die Schleppkette 94 erstreckt sich innenseitig über die volle Länge des Kreisförderers 32. Im Bereich der abgerundeten Umlenkecken befinden sich Formräder 109, die Vertiefungen 110 für den formschlüssigen Eintritt von Kettenbolzen der Schleppkette 94 aufweisen. Eines der Formräder 109 ist als Antriebsrad ausgebildet und angetrieben.

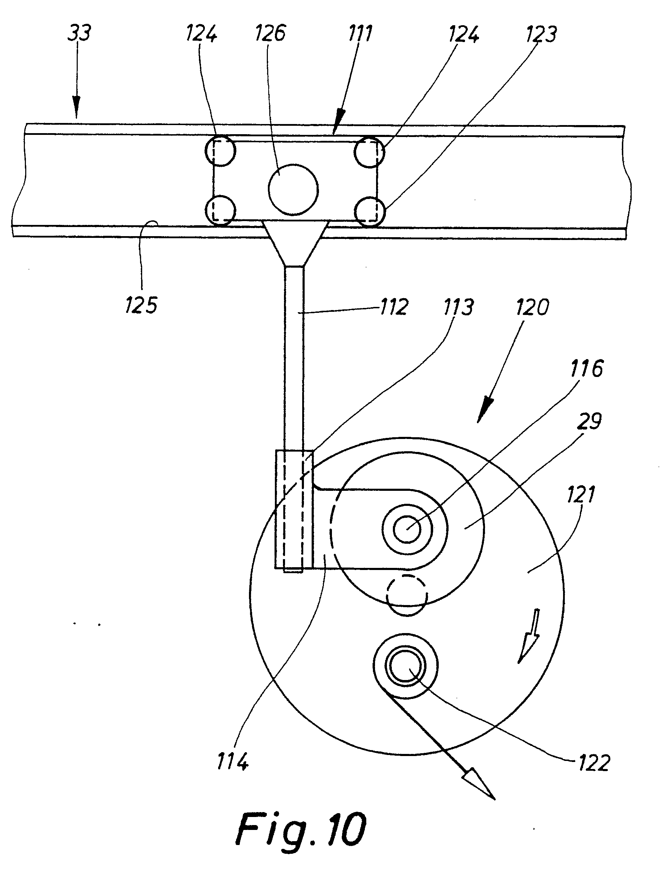

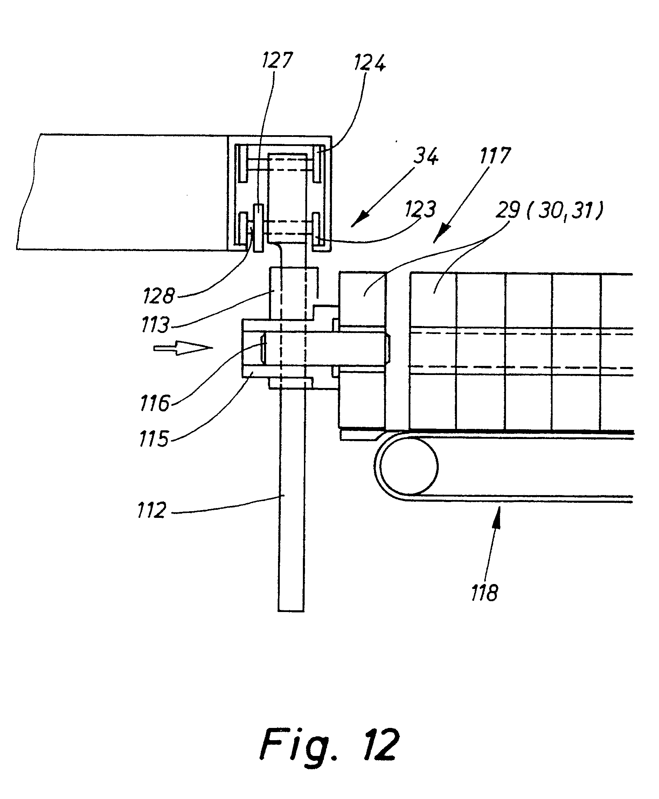

Eine Alternative für die Gestaltung des Kreisförderers 32 und der Bobinenträger 34 ist in Fig. 10 bis 12 gezeigt. An einem Laufrollenwagen 111 ist eine aufrechte Tragstange 112 nach unten weisend angebracht. Auf dieser ist eine Führungshülse 113 verschiebbar gelagert, z.B. durch motorischen Antrieb (Motor mit Ritzel und Zahnstange - im einzelnen nicht dargestellt - ). An einem seitlichen Ansatz 114 der Führungshülse 113 sitzt in einem horizontalen Lager 115 ein Bobinentragzapfen 116. Dieser ist in der beschriebenen Weise axial verschiebbar.

Im Bereich einer Beschickungsstation 117 werden Bobinen in koaxialer Anordnung auf einem Bobinenförderer 118 bereitgehalten. Die in Bewegungsrichtung jeweils vornliegende Bobine wird durch den Bobinenträger 34 aufgenommen, und zwar durch Axialverschiebung des Bobinentragzapfens 116 in der beschriebenen Weise. Der Bobinentragzapfen 116 bzw. die Führungshülse 113 desselben befindet sich dabei in einer oberen Position auf der Tragstange 112.

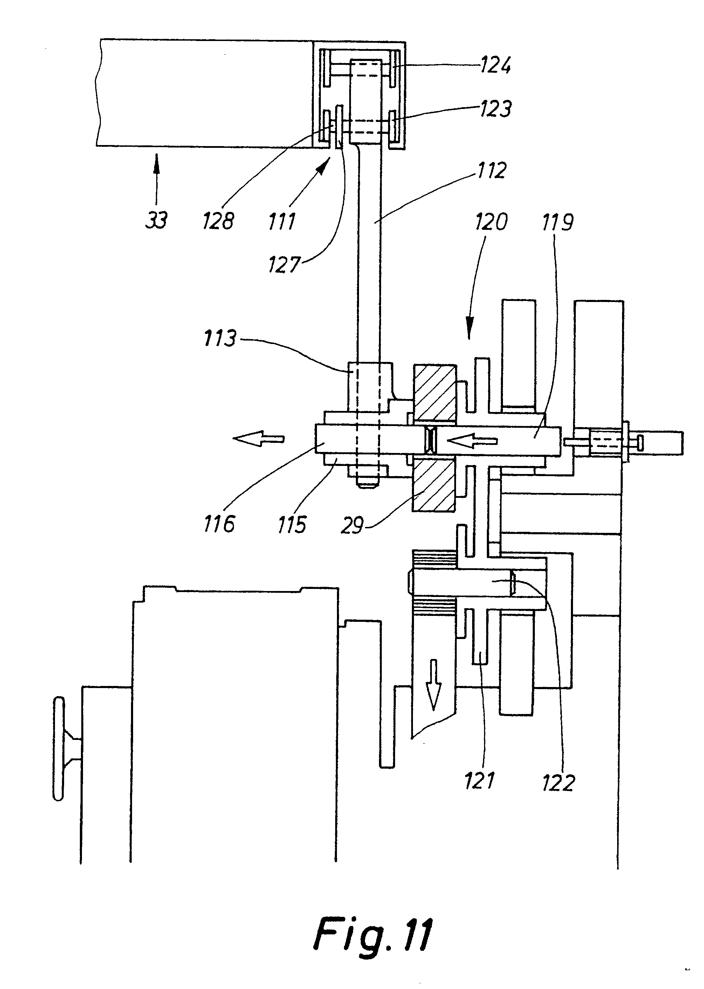

Durch den Laufrollenwagen 111 wird nunmehr der Bobinenträger 34 in eine Position benachbart zu einer Verarbeitungsmaschine gefördert (Fig. 10 und 11). Hier wird die Führungshülse 113 auf der Tragstange 112 abwärts bewegt, bis sich der Bobinentragzapfen 116 axial ausgerichtet in Höhe eines Bobinentragzapfens 119 einer maschinenseitigen Bobinenwechselvorrichtung 120 befindet. In der beschriebenen Weise wird jetzt durch Axialverschiebung des Bobinentragzapfens 119 einerseits und des Bobinentragzapfens 116 andererseits die Übergabe der Bobine auf die Bobinenwechselvorrichtung 120 bewirkt.

Die Bobinenwechselvorrichtung 120 ist bei dieser Ausführungsform so gestaltet, daß jeweils zwei Bobinen übereinanderliegen. Durch ein gemeinsames Tragorgan 121 werden diese Bobinen bzw. deren Bobinentragzapfen 119, 122 in die (untere) Arbeitsposition bewegt.

Der Laufrollenwagen 111 dieses Bobinenträgers 34 ist mit jeweils vier unteren Laufrollen 123 und vier oberen Führungsrollen 124 versehen. Diese laufen in einer kanalförmigen, lediglich unten offenen Förderschiene 125. Der Antrieb der Laufrollenwagen 111 erfolgt hier durch einen jedem Laufrollenwagen zugeordneten Antriebsmotor 126, der über ein Ritzel 127 auf eine zwei Laufrollen 123 miteinander verbindende Welle 128 wirkt.

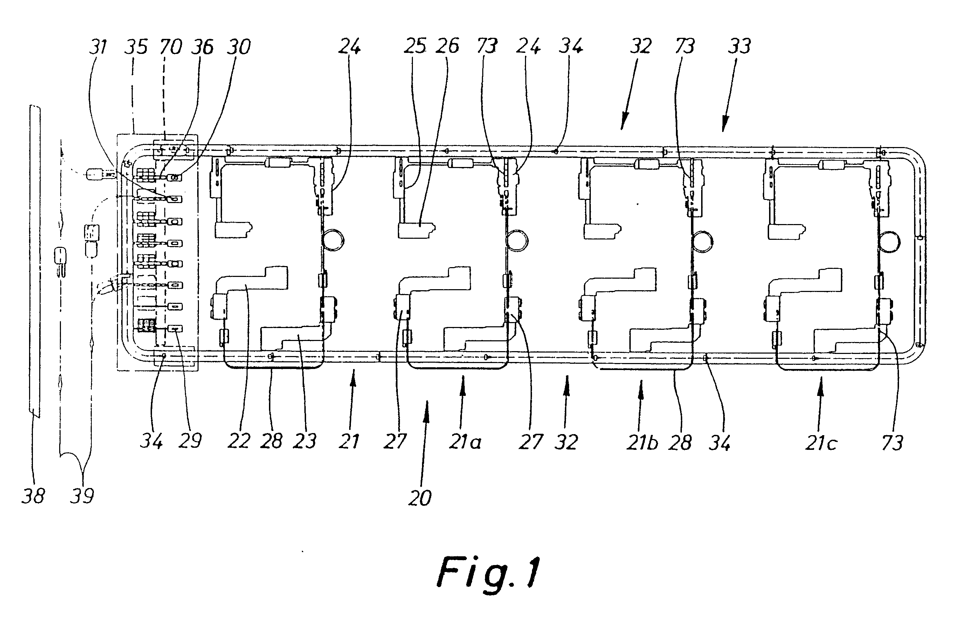

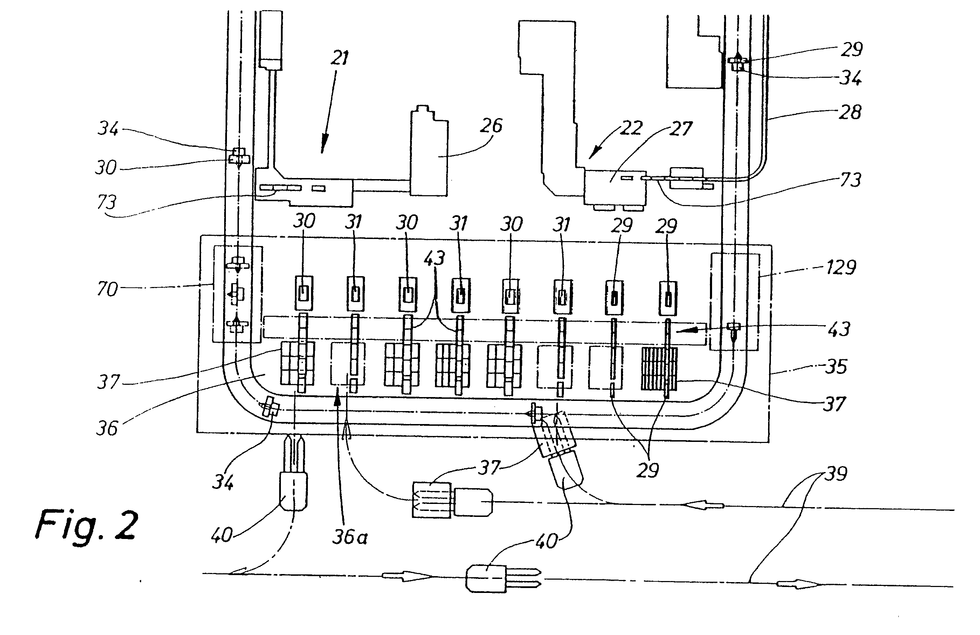

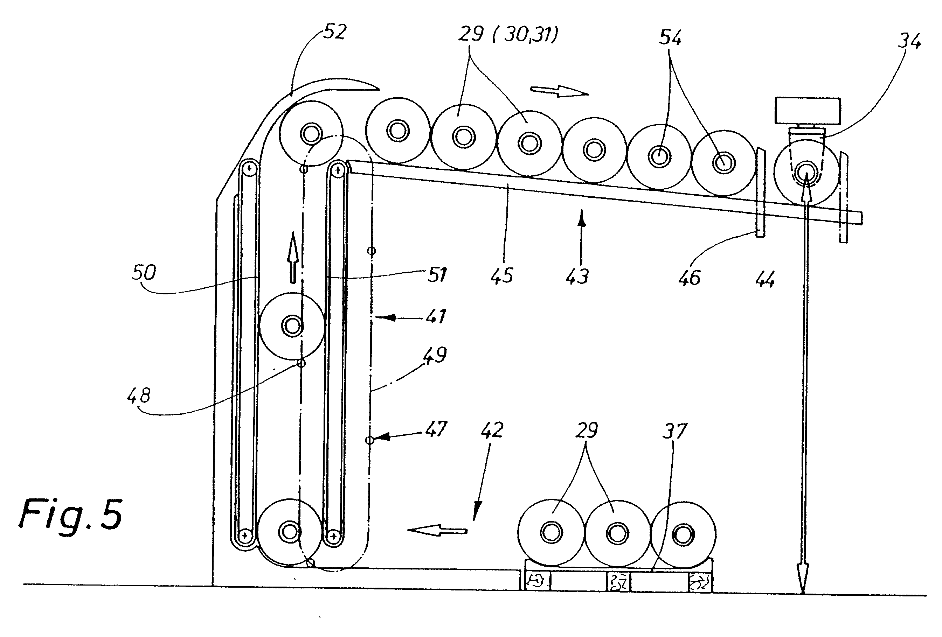

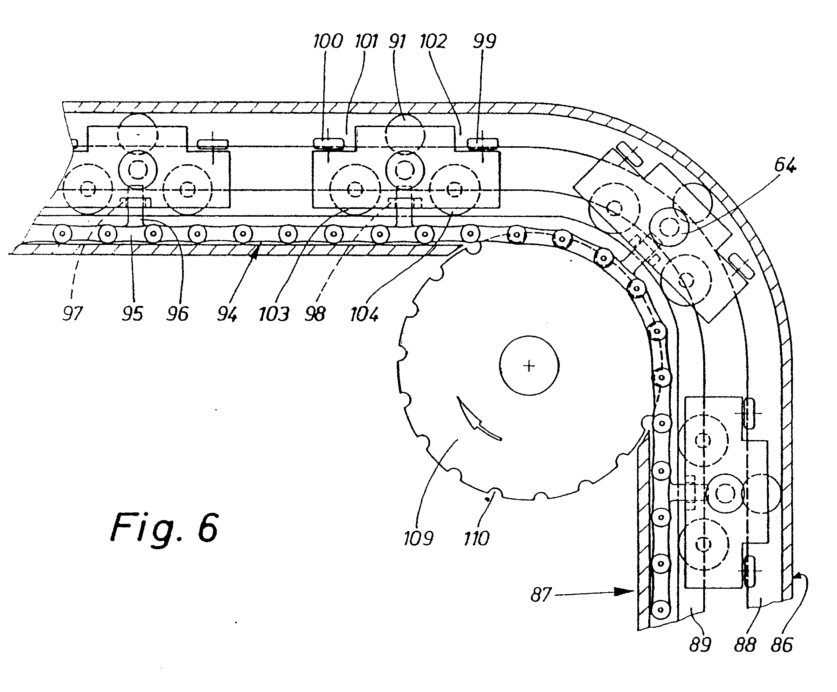

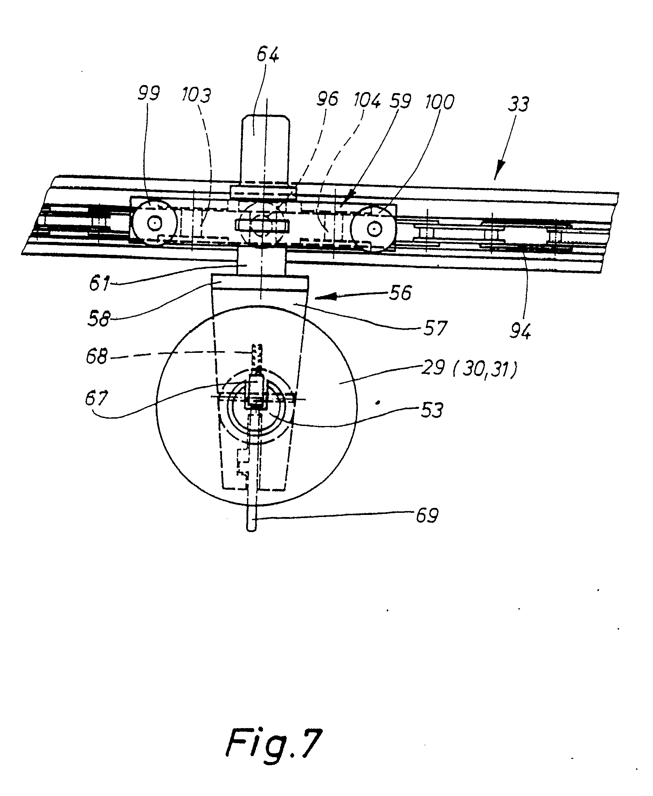

Die Beschickungsstation 117 kann bei diesem Ausführungsbeispiel in analoger Weise angeordnet sein wie die Beladestationen des Ausführungsbeispiels gemäß Fig. 1 bis 9.

Bei der Versorgung der Fertigungs- bzw. Verpackungsanlage werden den Beladestationen 36, 36a, 36b.. der Beladezone 35 durch die Gabelstapler 40 Paletten 37 mit den jeweiligen Bobinen in ausreichendem Umfange zugestellt. Damit keine Engpässe entstehen, sind für jede Bobinentype mindestens zwei Beladestationen vorgesehen. Die Bobinenträger 34 sind aufgrund ihrer Ausgestaltung, insbesondere Abmessung, auf einen bestimmten Bobinentyp ausgelegt. Leere Bobinenträger 34 werden im Bereich der Beladezone 35 mit der passenden Bobine versehen.

Anschließend werden die Bobinenträger 34 im Bereich der Drehstation 70 um 180° gedreht. Je nach Bedarf werden im weiteren Verlauf der Förderbewegung Bobinen von den Bobinenträgern in der geschilderten Weise abgenommen. Die entleerten Bobinen werden im Bereich einer Rückdrehstation 129 in die Ausgangsposition zurückgedreht, nämlich mit nach vorn weisendem Tragzapfen 53. Soweit während eines Umlaufs ein Bobinenträger 34 nicht entleert worden ist, bleibt dieser in der Förderposition (mit nach rückwärts weisendem Tragzapfen 53) und gelangt ohne Beladungsvorgang in den Kreislauf zurück.

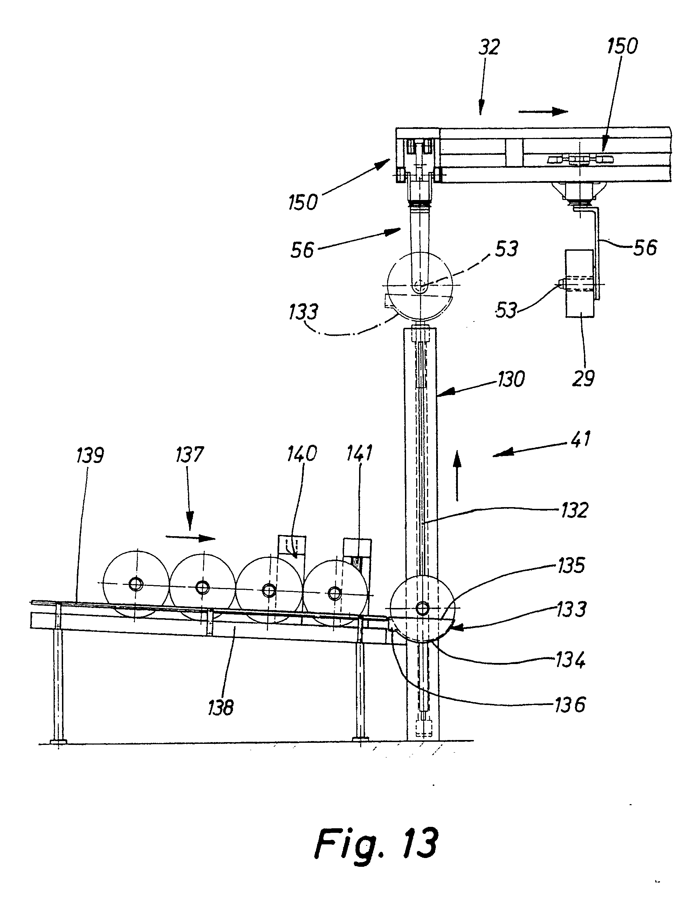

Eine Alternative für die Ausbildung der Beladestationen 36, 36a, 36b.. ist in Fig. 13 in schematischer Seitenansicht gezeigt. Dem Kreisförderer 32 ist ein besonderer, handelsüblicher Hochförderer 41 zugeordnet. Es handelt sich dabei um einen aufrechten Pneumatikförderer 130,der aus einem langgestreckten, aufrechten Zylinder 131 ohne Kolbenstange besteht (ORIGA-Pneumatikzylinder). In dem Zylinder 131 ist ein Kolben pneumatisch auf- und abbewegbar, der über einen seitlichen, durchgehenden, aufrechten Schlitz 132 und einem in diesem mitlaufenden Verbindungsstück an eine außerhalb des Zylinders 131 angeordnete Aufnahme für eine Bobine 29, 30, 31 angeschlossen ist. Die Aufnahme, die bei dem vorliegenden Ausführungsbeispiel als in Seitenansicht teilkreisförmige Tragschale 133 ausgebildet ist, verläuft demnach seitlich neben dem Zylinder 131. Die in aufrechter Ebene ausgerichtete Bobine 29, 30, 31 liegt dabei auf einer kreisbogenförmigen Bodenwand 134 der Tragschale auf. Auf der von dem Zylinder 131 abliegenden Seite ist die Tragschale 133 mit einer Seitenwand 135 versehen, während sie an der gegenüberliegenden Seite offen ist. An einer Querseite der Tragschale 133 ist ein Einlaufstück angeschlossen, nämlich eine schräg abwärtsgerichtete Brücke 136. Über diese kann jeweils eine Bobine selbsttätig in die Tragschale 133 rollen, so daß eine bedienungsfreie Beladung der Tragschale 133 erfolgen kann.

Am oberen Ende des Pneumatikförderers 130 gelangt die Tragschale 133 in eine Position oberhalb des Zylinders 131. Dadurch kann die Bobine selbsttätig in Axialrichtung derselben aus der Tragschale 133 in der beschriebenen Weise infolge Mitnahme durch einen Bobinenträger 34 abgefördert werden, nämlich über die offene Seite der Tragschale 133. Der Pneumatikförderer 130 ist so bemessen, daß in der oberen Endposition die Bobine exakt auf die Förderbahn des Bobinenträgers 34 bzw. des Tragzapfens 53 ausgerichtet ist.

Die Beladung erfolgt selbsttätig. Zu diesem Zweck ist ein am Boden angeordneter, ortsfester Bodenspeicher 137 für eine Anzahl von Bobinen 29.. dem Pneumatikförderer 130 zugeordnet. Der Bodenspeicher 137 wirkt aufgrund einer schräg zum Pneumatikförderer 130 abfallenden Lagerebene für die aufrecht angeordneten Bobinen zugleich als bodenseitiger Zuförderer für die Bobinen.

Bei dem Ausführungsbeispiel der Fig. 13 ist der Bodenspeicher 137 als schräg abwärtsfördernde Rollbahn 138 ausgebildet mit seitlichen Führungsstangen 139 für die Bobinen. An das untere Ende der Rollbahn 138 schließt in der unteren Aufnahmeposition der Tragschale 133 die Brücke 136 als Fortsetzung der Rollbahn 138 an, so daß die Bobinen absatzfrei in die Tragschale 133 einlaufen können.

Zur aufeinanderfolgenden Übergabe der Bobinen an den Pneumatikförderer 130 wird jeweils nur eine Bobine freigegeben. Zur diesem Zweck ist eine Stoppeinrichtung mit zwei je einer Bobine zugeordneten, auf- und abbewegbaren Stoppern 140 und 141 oberhalb der Rollbahn 138 angeordnet. Nach Aufnahme einer Bobine durch die Tragschale 133 wird der Stopper 141 in die untere Position bewegt. Dadurch können die nachfolgenden Bobinen auf der Rollbahn 138 gegen diesen den Pneumatikförderer 130 benachbarten Stopper 141 laufen. Soll nun die nächste Bobine für die Übergabe an die Tragschale 133 freigegeben werden, wird der Stopper 140 abgesenkt, um die weiteren Bobinen zu fixieren. Der Stopper 141 wird nun zurückgezogen, so daß die vordere bzw. dem Pneumatikförderer 130 benachbarte Bobine frei kommt. Die Bobinen können bei dieser Ausbildung des Bodenspeichers 137 von Hand auf die Rollbahn 138 aufgesetzt werden.

Bei dem Ausführungsbeispiel der Fig, 14 ist der Bodenspeicher 137 eine entsprechend ausgebildete Palette 142. Auf dieser sind die Bobinen in aufrechter Ebene auf einem Palettenboden 143 stehend angeordnet. Mindestens auf der dem Pneumatikförderer 130 zugeordneten Seite ist die Palette 142 ohne seitliche Begrenzung, also ohne Seitenbord ausgebildet, so daß hier die Bobinen frei von der Palette 142 bzw. dem Palettenboden 143 abrollen können, und zwar über die Brücke 136 in die Tragschale 133.

Die Palette 142 wird zu diesem Zweck auf eine Tragvorrichtung gesetzt, die die Palette 142 in eine Neigung zum Pneumatikförderer 130 abfallend kippt und zugleich auf den Pneumatikförderer 130 bzw. die Tragschale 133 durch Querverschiebung ausrichtet. Die Vorrichtung besteht hier aus einem Tragsockel 144 und einem Tisch 145, auf dem die Palette 142 lagert. Der Tisch 145 ist auf dem Tragsockel 144 abgestützt und um ein Lager 146 schwenkbar. Mit Abstand von diesem ist ein Hubbolzen 147 aus dem Tragsockel 144 herausragend angeordnet. Dieser wird gegen die Unterseite des Tisches 145 gefahren, wodurch dieser in eine Schräglage gekippt wird.

Der Palette 142 ist eine Stoppeinrichtung mit den Stoppern 140 und 141 in der bereits beschriebenen Ausführung zugeordnet.

Der Kreisförderer 32 ist bei der vorstehend beschriebenen Ausführungsform in einer anderen Weise ausgebildet als bei den vorhergehenden, nämlich mit jeweils zwei Paaren von übereinander angeordneten Laufschienen 148 und 149 und einem hierauf abgestellten Laufrollenwagen 150. Dieser Aufbau des Kreisförderers 32 ist im Prinzip bekannt. An dem Laufrollenwagen 150 ist der in besonderer Weise ausgebildete und um eine vertikale Achse drehbare Bobinenträger 34 angebracht.

## Patentansprüche

1. Einrichtung zum Transport von Gegenständen, insbesondere Bobinen, von einem Vorrat zu wenigstens einer Abnahmestation, insbesondere zu einer Mehrzahl von Verpackungs- oder anderen Verarbeitungsmaschinen einer (Zigaretten-)Herstellungs- und/oder Verpackungsanlage, mit mindestens einem oberhalb der Verarbeitungsmaschinen (Linien 21) verlaufenden Kreisförderer (32) mit einer Mehrzahl von Gegenstandsträgern, insbesondere Bobinenträgern (34), mit je einem vorkragenden Tragorgan, insbesondere mit einem Tragzapfen (53), welcher zur Aufnahme wenigstens eines Gegenstands bzw. einer Bobine (29,30,31) in eine entsprechende Öffnung (54) der Bobine mit seinem freien Ende voran in Förderrichtung des Bobinenträgers einführbar und zur Übergabe des Gegenstands bzw. der Bobine an eine Verarbeitungsmaschine vorgesehen ist, **dadurch gekennzeichnet, daß** der den Tragzapfen (53) aufnehmende Teil des Bobinenträgers (34), insbesondere ein Tragarm (56), um eine vertikale Achse derart drehbar gelagert ist, daß der Tragzapfen (53) mit der aufgenommenen Bobine in zur Förderrichtung des Bobinenträgers (34) entgegengesetzter Richtung drehbar ist, und daß im Bereich einer Entladestation (71) wenigstens ein in den Förderweg der aufgenommenen Bobine (29, 30, 31) hineinbewegbarer Abstreiferanschlag (72) vorgesehen ist, an dem das gedrehte Tragorgan in Förderrichtung vorbeibewegbar und die von diesem aufgenommene Bobine abstreifbar sind.

2. Einrichtung nach Anspruch 1 sowie einem oder mehreren der weiteren Ansprüche, dadurch gekennzeichnet, daß der Bobinenträger (34) an einem in einer Förderschiene (33) des Kreisförderers (32) verfahrbaren Laufrollenwagen (60) mit Fahrgestell (59) hängend und um eine vertikale Achse drehbar angebracht ist.

3. Einrichtung nach Anspruch 2 sowie einem oder mehreren der weiteren Ansprüche, dadurch gekennzeichnet, daß der Bobinenträger bzw. dessen Tragarm (56) mit einem aufrechten Drehbolzen (61) im Fahrgestell (59) des Laufrollenwagens (60) mittig mit einem Axiallager, insbesondere mit einem Bund (62) gelagert ist.

4. Einrichtung nach Anspruch 1 sowie einem oder mehreren der weiteren Ansprüche, dadurch gekennzeichnet, daß der Bobinenträger (34) bzw. der Tragarm (56) durch einen gesonderten, dem jeweiligen Bobinenträger zugeordneten Antrieb drehbar ist, insbesondere durch einen an der Oberseite des Laufrollenwagens (60) angeordneten E-Motor (64).

5. Einrichtung nach Anspruch 1 sowie einem oder mehreren der weiteren Ansprüche, dadurch gekennzeichnet, daß der den Tragzapfen (53) aufnehmende Tragarm (56) des Bobinenträgers (34) abgekröpft bzw. abgewinkelt ausgebildet ist mit einem zur Drehachse versetzten aufrechten Schenkel (57), an dem der Tragzapfen (53) einseitig abstehend angebracht ist, derart, daß eine durch den Tragzapfen (53) aufgenommene Bobine (29, 30, 31) mittig zur vertikalen Drehachse des Drehbolzens (61) gehalten ist.

6. Einrichtung nach Anspruch 1 sowie einem oder mehreren der weiteren Ansprüche, dadurch gekennzeichnet, daß die Bobine (29, 30, 31) durch ein lösbares Sicherungsorgan, insbesondere durch einen in die Mittenöffnung (54) eintretenden Schwenkhaken (67) auf dem Tragzapfen (53) fixiert ist, wobei das Sicherungsorgan in der Beladestation (36, 36a, 36b..) sowie in der Entladestation (71) außer Eingriff bewegbar ist.

7. Einrichtung nach Anspruch 2 sowie einem oder mehreren der weiteren Ansprüche, dadurch gekennzeichnet, daß der Laufrollenwagen (60) durch drei Laufräder (98,99, 100) auf Laufbahnen der Förderschiene (33), insbesondere auf Schienenschenkel (88, 89) derselben, abgestützt ist, wobei eine einzelne Laufrolle (Kugellager 98) an der Innenseite des Laufrollenwagens (60) und etwa in der mittleren Querebene angeordnet ist, während an der gegenüberliegenden (äußeren) Seite zwei Laufräder (99, 100) mit Abstand voneinander (vorn und hinten) angeordnet sind.

8. Einrichtung nach Anspruch 2 sowie einem oder mehreren der weiteren Ansprüche, dadurch gekennzeichnet, daß die Laufrollenwagen (60) des Kreisförderers (32) durch ein gemeinsames Zugorgan, insbesondere durch eine endlose, umlaufende Schleppkette (94) in förderndem Sinne bewegbar sind, wobei die Schleppkette (94) in einem seitlichen Kanal, insbesondere einer seitlichen, etwa in mittlerer Höhe verlaufenden Führungsnut (93) der Förderschiene (33), vorzugsweise der inneren Teilschiene (87) derselben geführt ist.

9. Einrichtung nach Anspruch 8, dadurch gekennzeichnet, daß die Schleppkette (94) durch Querverbindung mit dem Laufrollenwagen (60) verbunden ist, vorzugsweise durch einen quer abstehenden Mitnehmerzapfen (96), der in eine Vertiefung (97) des Fahrgestells (59) ragt, insbesondere konzentrisch zum Kugellager (98).

10. Einrichtung nach Anspruch 2 sowie einem oder mehreren der weiteren Ansprüche, dadurch gekennzeichnet, daß die Laufrollenwagen (60) durch um vertikale Achsen drehende Stützräder (91, 103, 104) an Seitenflächen der Förderschiene (33) des Kreisförderers (32) abgestützt sind, insbesondere mit einem einzelnen, mittigen Stützrad (91) auf der Außenseite und mit zwei im Abstand voneinander angeordneten Stützrollen (103, 104) an der Innenseite der Förderschiene (33), wobei die innenliegenden Stützrollen (103, 104) wie Garnrollen ausgebildet sind mit oberen und unteren Radflanschen (107, 108).

11. Einrichtung nach Anspruch 1 sowie einem oder mehreren der weiteren Ansprüche, dadurch gekennzeichnet, daß die Bobinen (29, 30, 31) auf einem zur Verarbeitungsmaschine (Bobinenwechselvorrichtung 75) führenden Zwischenförderer bzw. Übergabeförderer (73) absetzbar sind, insbesondere auf eine schräg abwärtsführende Bahn bei Anordnung der Bobinen in aufrechter Ebene.

12. Einrichtung nach Anspruch 11 sowie einem oder mehreren der weiteren Ansprüche, dadurch gekennzeichnet, daß die Bobinen (29, 30, 31) im unteren Endbereich des Übergabeförderers (73) in einer Position vor einer Bobinenwechselvorrichtung (75), insbesondere ausgerichtet auf einen Bobinentragzapfen (81) eines Transportarms (76), fixiert sind, wobei der Bobinentragzapfen (81) durch Axialverschiebung in die Mittenöffnung (54) der Bobine einschiebbar ist.

13. Einrichtung nach Anspruch 1 sowie einem oder mehreren der weiteren Ansprüche, dadurch gekennzeichnet, daß die Bobinen (29, 30, 31) durch einen Hochförderer (41), insbesondere einen ständig umlaufenden, endlosen Stangenförderer (47), der Beladestation (36, 36a, 36b..) zuführbar sind.

14. Einrichtung nach Anspruch 13 sowie einem oder mehreren der weiteren Ansprüche, dadurch gekennzeichnet, daß an dem Hochförderer (41) ein Zwischenförderer (43) anschließt, insbesondere eine schräg abwärtsgerichtete Förderbahn (45), auf der die in aufrechter Ebene positionierten Bobinen rollend einer am unteren Ende des Zwischenförderers (43) gebildeten Übernahmestelle (44) für die Übernahme einer Bobine durch einen Bobinenträger (34) zuführbar sind.

15. Einrichtung nach Anspruch 1 sowie einem oder mehreren der weiteren Ansprüche, dadurch gekennzeichnet, daß die Bobinenträger (34) bzw. deren Tragzapfen (53) für die Aufnahme unterschiedlicher Bobinenarten (Papier-Bobine 29, Stanniol-Bobine 30, Poly-Bobine 31) ausgebildet sind, wobei jeder Bobinenart eine gesonderte Beladestation (36, 36a, 36b) zugeordnet ist.

16. Einrichtung nach Anspruch 1 sowie einem oder mehreren der weiteren Ansprüche, dadurch gekennzeichnet, daß in jeder Beladestation (36, 36a, 36b..) dem Hochförderer (41, 130) ein Bodenspeicher (137) zugeordnet ist zur Aufnahme einer Mehrzahl von an den Hochförderer (41) zu übergebenden Bobinen (29, 30, 31), wobei der Bodenspeicher (137) als Förderer ausgebildet ist, insbesondere mit in Richtung zum Hochförderer (41) abfallender Rollebene für die Bobinen.

17. Einrichtung nach Anspruch 16 sowie einem oder mehreren der weiteren Ansprüche, dadurch gekennzeichnet, daß der Hochförderer (41) mit einer für den selbsttätigen Eintritt von Bobinen ausgebildeten Aufnahme versehen ist, insbesondere mit einer der Form der Bobine angepaßten, kreisförmigen Tragschale (133), in die die Bobinen über eine schräggerichtete Brücke (136) hinweg durch Rollbewegung einzutreten vermögen.

18. Einrichtung nach Anspruch 16 sowie einem oder mehreren der weiteren Ansprüche, dadurch gekennzeichnet, daß die Bobinen in aufrechter Position auf einer Palette (142) als Bodenspeicher gelagert sind, wobei die Palette (142) durch Schrägstellung in eine Förderposition bewegbar ist zur selbsttätigen, rollenden Zuführung von Bobinen zum Hochförderer (41).

19. Einrichtung nach Anspruch 18, dadurch gekennzeichnet, daß die Palette (142) auf einen Tragsockel (144) bzw. auf einen Tisch (145) desselben aufsetzbar ist, wobei der Tisch (145) durch Kipporgane (Lager 146, Hubbolzen 147) in eine Schrägstellung bewegbar ist.

**Claims**

1. Apparatus for transporting articles, especially reels, from a stock to at least one take-off station, especially to a plurality of packaging or other processing machines of a (cigarette) production and/or packaging plant, with at least one circular conveyor (32) running above the processing machines (lines 21) and having a plurality of article carriers, especially reel carriers (34), each with a projecting supporting member, especially with a supporting journal (53), which, for receiving at least one article or reel (29, 30, 31), can be introduced into a corresponding orifice (54) of the reel with its free end in front in the conveying direction of the reel carrier and which is intended for transferring the article or reel to a processing machine, characterised in that the part of the reel carrier (34), especially a supporting arm (56), receiving the supporting journal (53) is mounted rotatably about a vertical axis in such a way that the supporting journal (53) is rotatable together with the received reel in a direction opposite to the conveying direction of the reel carrier (34), and in that in the region of an unloading station (71) there is at least one stripper stop (72) which is movable into the conveying path of the received reel (29, 30, 31) and past which the rotated supporting member can be moved in the conveying direction and the reel received by this stripped off.

2. Apparatus according to Claim 1 and one or more of the further claims, characterised in that the reel carrier (34) is suspended on a bogie (60) movable in a conveying rail (33) of the circular conveyor (32) and having an undercarriage (59) and is attached so as to be rotatable about a vertical axis.

3. Apparatus according to Claim 2 and one or more of the further claims, characterised in that, by means of a vertical pivot pin (61), the reel carrier or its supporting arm (56) is mounted centrally in the undercarriage (59) of the bogie (60) by way of an axial bearing, especially a collar (62).

4. Apparatus according to Claim 1 and one or more of the further claims, characterised in that the reel carrier (34) or the supporting arm (56) is rotatable by means of a separate drive assigned to the particular reel carrier, especially by means of an electric motor (64) arranged on the top side of the bogie (60).

5. Apparatus according to Claim 1 and one or more of the further claims, characterised in that the supporting arm (56) receiving the supporting journal (53) and belonging to the reel carrier (34) is bent or angled, with a vertical leg (57) which is offset relative to the axis of rotation and to which the supporting journal (53) is attached so as to project from one side, in such a way that a reel (29, 30, 31) picked up by the supporting journal (53) is held centrally relative to the vertical axis of rotation of the pivot pin (61).

6. Apparatus according to Claim 1 and one or more of the further claims, characterised in that the reel (29, 30, 31) is fixed on the supporting journal (53) by means of a releasable locking member, especially by means of a swing hook (67) entering the central orifice (54), the locking member being movable out of engagement in the loading station (36, 36a, 36b, etc.) and in the unloading station (71).

7. Apparatus according to Claim 2 and one or more of the further claims, characterised in that the bogie (60) is supported by means of three running wheels (98, 99, 100) on running tracks of the conveying rail (33) especially on rail legs (88, 89) of the latter, a single running wheel (ball bearing 98) being arranged on the inner face of the bogie (60) and approximately in the middle transverse plane, whilst two running wheels (99, 100) are arranged at a distance from one another (at the front and at the rear) on the opposite (outer) face.

8. Apparatus according to Claim 2 and one or more of the further claims, characterised in that the bogies (60) of the circular conveyor (32) are movable for conveying purposes by means of a common pulling member, especially by means of an endless rotating drag chain (94), the drag chain (94) being guided in a lateral channel, especially a lateral guide slot (93) extending approximately at midheight and provided in the conveying rail (33), preferably the inner part rail (87).

9. Apparatus according to Claim 8, characterised in that the drag chain (94) is connected to the bogie (60) by means of a cross connection, preferably by means of a transversely projecting driving pin (96) which projects into a recess (97) of the undercarriage (59), especially concentrically relative to the ball bearing (98).

10. Apparatus according to Claim 2 and one or more of the further claims, characterised in that the bogies (60) are supported on side faces of the conveying rail (33) of the circular conveyor (32) by means of supporting wheels (91, 103, 104) rotating about vertical axes, especially by means of a single central supporting wheel (91) on the outer face of the conveying rail (33) and two supporting rollers (103, 104), arranged at a distance from one another, on the inner face of the conveying rail (33), the inner supporting rollers (103, 104) being designed like bobbins with upper and lower wheel flanges (107, 108).

11. Apparatus according to Claim 1 and one or more of the further claims, characterised in that the reels (29, 30, 31) can be deposited on an intermediate conveyor or transfer conveyor (73) leading to the processing machine (reel-changing device 75), especially onto a track leading obliquely downwards when the reels are arranged in a vertical plane.

12. Apparatus according to Claim 11 and one or more of the further claims, characterised in that, in the lower end region of the transverse conveyor (73), the reels (29, 30, 31) are fixed in a position in front of a reel-changing device (75), especially aligned with a reel supporting journal (81) of a transport arm (76), and the reel supporting journal (81) can be pushed into the central orifice (54) of the reel as a result of an axial shift.

13. Apparatus according to Claim 1 and one or more of the further claims, characterised in that the reels (29, 30, 31) can be delivered to the loading station (36, 36a, 36b, etc) by means of an elevator (41), especially a constantly rotating endless rod conveyor (47).

14. Apparatus according to Claim 13 and one or more of the further claims, characterised in that the elevator (41) is followed by an intermediate conveyor (43), especially a conveying track (45) directed obliquely downwards, on which the reels positioned in a vertical plane can be delivered by rolling to a take-over point (44) formed at the lower end of the intermediate conveyor (43) and intended for the take-over of a reel by a reel carrier (34).

15. Apparatus according to Claim 1 and one or more of the further claims, characterised in that the reel carriers (34) or their supporting journals (53) are designed to pick up different types of reels (paper reel 29, tin foil reel 30, poly-reel 31), a separate loading station (36, 36a, 36b) being assigned to each type of reel.

16. Apparatus according to Claim 1 and one or more of the further claims, characterised in that, in each loading station (36, 36a, 36b, etc), a ground-level store (137) is assigned to the elevator (41, 130), for receiving a plurality of reels (29, 30, 31) to be transferred to the elevator (41), the ground-level store (137) being designed as a conveyor, especially with a rolling plane for the reels which descends in the direction of the elevator (41).

17. Apparatus according to Claim 16 and one or more of the further claims, characterised in that the elevator (41) is equipped with a receptacle designed for the automatic entry of reels, especially with a circular carrying dish (133) which matches the shape of the reel and which the reels can enter as a result of a rolling movement over and beyond an obliquely directed bridge (136).

18. Apparatus according to Claim 16 and one or more of the further claims, characterised in that the reels are mounted in a vertical position on a pallet (142) as a ground-level store, and the pallet (142), by being inclined, can be moved into a conveying position for the automatic rolling delivery of reels to the elevator (41).

19. Apparatus according to Claim 18, characterised in that the pallet (142) can be placed on a supporting pedestal (144) or on a table (145) of the latter, the table (145) being movable into an inclined position by means of tilting members (bearing 146, lifting pin 147).

**Revendications**

1. Dispositif de transport d'objets, en particulier de bobines, d'un stock à au moins un poste de réception, en particulier à un certain nombre de machines d'emballage ou autres machines de traitement d'une installation de fabrication et/ou d'emballage (de cigarettes), comportant au moins un transporteur circulaire (32) évoluant au-dessus des machines de traitement (lignes 21) et pourvu d'un certain nombre de supports d'objet, en particulier de supports de bobine (34), ayant chacun un organe de support en porte-à-faux, en particulier un axe support (53) qui, pour recevoir au moins un objet ou une bobine (29, 30, 31), peut être introduit dans une ouverture correspondante (54) de la bobine, son extrémité libre en avant dans la direction de transport du support de bobine, et est prévu pour la transmission de l'objet ou de la bobine à une machine de traitement, caractérisé par le fait que la partie du support de bobine (34) recevant l'axe support (53), en particulier un bras support (56), est montée tournante autour d'un axe vertical de façon telle que l'axe support (53), avec la bobine qu'il porte, puisse être tourné dans la direction opposée à la direction de transport du support de bobine (34), et que dans la zone d'un poste de déchargement (71) est prévue au moins une butée d'éjection (72) pouvant être mise sur la trajectoire de la bobine portée (29, 30, 31) et devant laquelle l'organe de support tourné peut être passé dans la direction de transport et contre laquelle la bobine portée par l'organe de support peut être éjectée.

2. Dispositif selon la revendication 1 et une ou plusieurs des autres revendications, caractérisé par le fait que le support de bobine (34) est monté suspendu et tournant autour d'un axe vertical sur un chariot à galets de roulement (60) à châssis (59) mobile dans un rail (33) du transporteur circulaire (32).

3. Dispositif selon la revendication 2 et une ou plusieurs des autres revendications, caractérisé par le fait que le support de bobine, ou son bras support (56), est monté par un axe vertical (61) dans le châssis (59) du chariot à galets de roulement (60), au milieu, avec un palier de butée, en particulier avec un collet (62).

4. Dispositif selon la revendication 1 et une ou plusieurs des autres revendications, caractérisé par le fait que le support de bobine (34), ou le bras support (56), peut être tourné par un dispositif moteur adjoint sépcialement à lui, en particulier par un moteur électrique (64) monté sur le dessus du chariot à galets de roulement (60).

5. Dispositif selon la revendication 1 et une ou plusieurs des autres revendications, caractérisé par le fait que le bras support (56) du support de bobine (34) portant l'axe support (53) est coudé, en ayant une branche verticale (57) décalée de l'axe de rotation sur laquelle l'axe support (53) est monté saillant d'un côté, de façon telle qu'une bobine (29, 30, 31) placée sur l'axe support (53) soit au milieu relativement à l'axe de rotation vertical de l'axe (61).

6. Dispositif selon la revendication 1 et une ou plusieurs des autres revendications, caractérisé par le fait que la bobine (29, 30, 31) est fixée sur l'axe support (53) par un organe d'arrêt dégageable, en particulier par un crochet basculant (67) entrant dans l'ouverture centrale (54), cet organe d'arrêt pouvant être dégagé au poste de chargement (36, 36a, 36b, ...) et au poste de déchargement (71).

7. Dispositif selon la revendication 2 et une ou plusieurs des autres revendications, caractérisé par le fait que le chariot à galets de roulement (60) s'appuie par trois roues de roulement (98, 99, 100) sur des chemins de roulement du rail (33), en particulier sur des ailes (88, 89) de celui-ci, un galet de roulement (roulement à billes 98) étant placé sur le côté intérieur du chariot (60) et à peu près dans le plan transversal médian tandis que deux roues de roulement (99, 100) sont placées à distance l'une de l'autre (en avant et en arrière) sur le côté opposé (extérieur).

8. Dispositif selon la revendication 2 et une ou plusieurs des autres revendications, caractérisé par le fait que les chariots à galets de roulement (60) du transporteur circulaire (32) sont mûs dans le sens de transport par un organe tracteur commun, en particulier par une chaîne de traînage tournante sans fin (94), cette chaîne (94) étant guidée dans un canal latéral, en particulier une rainure latérale de guidage (93) du rail (33), de préférence du rail partiel intérieur (87), située à peu près à mi-hauteur.

9. Dispositif selon la revendication 8, caractérisé par le fait que la chaîne de traînage (94) est liée au chariot à galets de roulement (60) par une liaison transversale, de préférence par un doigt d'entraînement saillant transversalement (96) qui entre dans un creux (97) du châssis (59), en particulier coaxialement avec le roulement à billes (98).

10. Dispositif selon la revendication 2 et une ou plusieurs des autres revendications, caractérisé par le fait que les chariots à galets de roulement (60) s'appuient sur des faces latérales du rail (33) du transporteur circulaire (32) par des roues d'appui (91, 103, 104) tournant autour d'axes verticaux, en particulier par une roue d'appui centrale (91) sur le côté extérieur du rail (33) et deux galets d'appui espacés (103, 104) sur le côté intérieur, les galets d'appui intérieurs (103, 104) étant faits comme des bobines de fil, à savoir pourvus de joues supérieure et inférieure (107, 108).

11. Dispositif selon la revendication 1 et une ou plusieurs des autres revendications, caractérisé par le fait que les bobines (29, 30, 31) peuvent être déposées sur un transporteur intermédiaire ou transporteur de transfert (73) allant à la machine de traitement (dispositif de changement de bobine 75), en particulier, si les bobines sont placées dans un plan vertical, sur un chemin descendant obliquement.

12. Dispositif selon la revendication 11 et une ou plusieurs des autres revendications, caractérisé par le fait que les bobines (29, 30, 31) sont, dans la partie extrême inférieure du transporteur de transfert (73), fixées dans une position devant un dispositif de changement de bobine (75), en particulier alignées sur un axe support de bobine (81) d'un bras transporteur (76), cet axe support de bobine (81) pouvant être introduit par déplacement axial dans l'ouverture centrale (54) de la bobine.

13. Dispositif selon la revendication 1 et une ou plusieurs des autres revendications, caractérisé par le fait que les bobines (29, 30, 31) peuvent être conduites au poste de chargement (36, 36a, 36b, ...) par un transporteur élévateur vertical (41), en particulier un transporteur à barres sans fin tournant en permanence (47).

14. Dispositif selon la revendication 13 et une ou plusieurs des autres revendications, caractérisé par le fait que le transporteur élévateur (41) est suivi d'un transporteur intermédiaire (43), en particulier d'un chemin de transport descendant obliquement (45) sur lequel les bobines placées dans un plan vertical peuvent aller en roulant à un emplacement de reprise (44) formé à l'extrémité inférieure du transporteur intermédiaire (43) pour la reprise d'une bobine par un support de bobine (34).

15. Dispositif selon la revendication 1 et une ou plusieurs des autres revendications, caractérisé par e fait que les supports de bobine (34), ou leur axe support (53), sont conçus pour recevoir différents types de bobines (bobine de papier 29, bobine de papier métallisé 30, bobine de poly 31), à chaque type de bobine étant affecté un poste de chargement spécial (36, 36a, 36b).

16. Dispositif selon la revendication 1 et une ou plusieurs des autres revendications, caractérisé par le fait qu'à chaque poste de chargement (36, 36a, 36b, ...), au transporteur élévateur (41, 130) est adjoint un magasin de base (137) destiné à recevoir un certain nombre de bobines (29, 30, 31) à transmettre au transporteur élévateur (41), ce magasin de base (137) étant constitué d'un transporteur, en particulier à plan de roulement des bobines descendant vers le transporteur élévateur (41).

17. Dispositif selon la revendication 16 et une ou plusieurs des autres revendications, caractérisé par le fait que le transporteur élévateur (41) est pourvu d'un élément récepteur conçu pour l'entrée automatique des bobines, en particulier d'une cuvette support circulaire (133) adaptée à la forme de la bobine dans laquelle les bobines peuvent entrer en roulant en franchissant un pont incliné (136).

18. Dispositif selon la revendication 16 et une ou plusieurs des autres revendications, caractérisé par le fait que les bobines sont stockées en position verticale sur une palette (142) faisant office de magasin de base, cette palette (142) pouvant, par inclinaison, être mise dans une position de transport pour l'amenée automatique de bobines au transporteur élévateur (41) par roulement.

19. Dispositif selon la revendication 18, caractérisé par le fait que la palette (142) peut être posée sur un socle support (144), plus précisément sur une table (145) de celui-ci, cette table (145) pouvant être mise dans une position inclinée par des organes de basculement (palier 146, tige élévatrice 147).

Fig.1

Fig. 2

EP 0 261 508 B1

**Fig. 3**

Fig. 4

Fig. 5

19

Fig. 6

EP 0 261 508 B1

*Fig.7*

Fig. 8

Fig.9

**Fig.10**

*Fig. 11*

**Fig. 12**

**Fig. 13**

Fig.14